# EUROPEAN PATENT SPECIFICATION

(11) **EP 2 362 661 B1**
(45) Date of publication and mention of the grant of the patent: **16.10.2013**
(21) Application number: 10154963.2
(22) Date of filing: 26.02.2010
(51) Int. Cl.: H04N 9/73

(54) **Mobile electronic device having a camera with improved auto white balance**
Mobile elektronische Vorrichtung mit Kamera mit verbessertem automatischem Weißabgleich
Dispositif électronique mobile doté d'un appareil photo doté d'une balance des blancs automatique améliorée

(43) Date of publication of application: 31.08.2011
(73) Proprietor: BlackBerry Limited, Waterloo, ON N2L 3W8 (CA)
(72) Inventor: Drader, Marc, Waterloo Ontario N2L 3W8 (CA); Purdy, Michael, Waterloo Ontario N2L 3W8 (CA); Robinson, James, Waterloo Ontario N2L 3W8 (CA)
(74) Representative: Fennell, Gareth Charles

(56) References cited:
- US-A- 5 555 022
- US-A- 5 617 141
- US-A1- 2003 001 958
- US-A1- 2003 160 876
- US-A1- 2007 002 150

## Description

### BACKGROUND

### Field

The disclosed and claimed concept relates generally to mobile electronic devices and, more particularly, to a mobile electronic device having a camera, that includes an improved auto white balance, and an associated method.

### Description of the Related Art

Numerous types of mobile electronic devices are known. Examples of such mobile electronic devices include, for instance, personal data assistants (PDAs), mobile computers, two-way pagers, cellular telephones, and the like. Many mobile electronic devices also feature a wireless communication capability, although many such mobile electronic devices are stand-alone devices that are functional without communication with other devices.

Some mobile electronic devices and other electronic devices employ small cameras which can generate images such as still photographs and video that are then stored on the electronic device. Such cameras typically comprise a camera lens, a sensor, and a processor system that are manufactured and sold as a modular unit. That is, the sensor receives light through the camera lens and provides an image signal to an embedded program stored and executed on the processor system in order to process the image in various ways. For instance, the image might be processed to compensate for various shortcomings of the camera lens. Additionally or alternatively, an image may be subjected to an auto white balance system.

While such mobile electronic devices and cameras have been generally effective for their intended purposes, such cameras have not come however, been without limitation, Some cameras possess limited processing capabilities and often have no frame store, which makes image processing difficult to achieve successfully in all situations. For instance, photos taken by a camera can have a poor color contrast or unnatural colors depending upon processing by an auto white balance system. It thus would be desirable to provide an improved mobile electronic device having a camera with an improved auto white balance system.

[0004a] US 2003/0160876 describes an imaging apparatus that has: a white balance control circuit for detecting an achromatic portion of an image of an object and controlling gains of the chrominance; an object distance detecting circuit for detecting a distance to the object; and a zoom value detecting circuit for detecting a zoom value of the optical system. The imaging apparatus further has: an object brightness detecting circuit for detecting brightness of the object; and a white balance control amount adjustment value setting circuit for forming a white balance control amount adjustment value to adjust a control amount in the white balance control circuit on the basis of object brightness information, object distance detection information, and zoom value information, wherein the white balance control amount is adjusted on the basis of the white balance control amount adjustment value.

[0004b] US 5,555,022 describes an apparatus that determines when continuing regions have the same colour and adjusts a weighing amount for colour evaluating values of a corresponding region to limit its effect upon gain control signals used to adjust the gain of colour signal amplifiers.

[0004c] US 5,617,141 describes an image pickup device including an image pickup unit for converting an optical image of a subject to an image signal, a signal processor for producing a video signal from the image signal, an ambience determining unit for determining image pickup ambience of the subject, and a control unit for controlling image quality of the video signal output from said signal processor in accordance with a result of the determination of the ambience determining unit.

[0004d] US2007/0002150 describes an image signal processor having a white balance processing block that carries out a white balance process for an image signal based on a photographing magnification of a photographic optical system, an object distance, and the light intensity of the optical image.

[0004e] US 2003/0001958 describes: an image-capturing device that captures a subject image through an exchangeable lens; a white balance sensor that is set at a position conjugate with the position of the image-capturing device relative tothe exchangeable lens to receive the light from the subject image and output colour signals; and a white balance adjustment signal calculation circuit that calculates white balance adjustment basic signals based upon the colour signals output from the white balance sensor and weighting points in conformance to the photographic range, the number of sets of red colour data and the subject brightness value.

### SUMMARY OF DISCLOSURE

[0004f] Aspects of the present disclosure are set out in the appended claims.

### BRIEF DESCRIPTION OF THE DRAWINGS

A full of the disclosed and claimed concept can be obtained from the following Description when read in conjunction with the accompanying drawings in which:

Fig. 1 is a schematic depiction of an exemplary mobile electronic device in accordance with the disclosed and claimed concept; and

Fig. 2, which is presented as Fig. 2A and Fig. 2B, is a flowchart depicting certain aspects of an improved method that can be performed on the mobile electronic device of Fig. 1.

Similar numerals refer to similar parts throughout the specification,

### DESCRITION

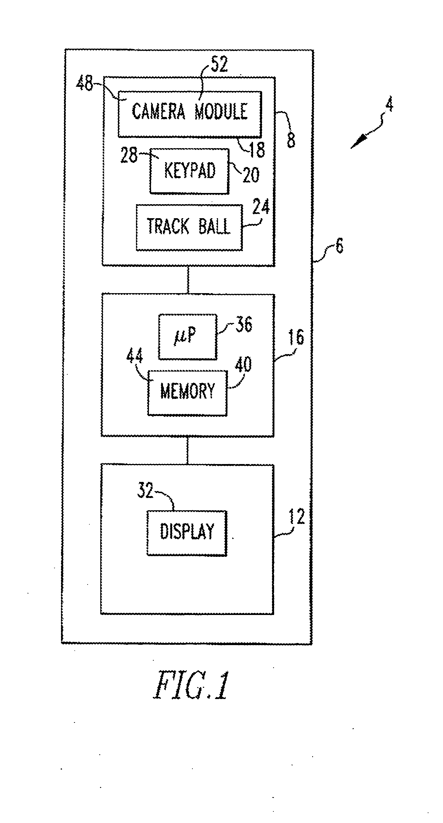

An improved mobile electronic device 4 in accordance with the disclosed and claimed concept is depicted schematically in Fig. 1. The improved mobile electronic device 4 comprises a housing 6, and further comprises an input apparatus 8, an output apparatus 12, and a processor apparatus 16 disposed on the housing 6. The input apparatus 8 provides input to the processor apparatus 16. The processor apparatus 16 provides output signals to the output apparatus 12 which, in the embodiment described herein, comprises a display 32.

The input apparatus 8 comprises a camera module 18 and may further include a keypad 20 or a track ball 24 or both. The keypad 20 in the exemplary embodiment herein comprises a plurality of keys 28 that are each actuatable to provide input to the processor apparatus 16. The track bail 24 is rotatable to provide navigational and other input to the processor apparatus 16, and additionally is translatable in a direction inwardly toward the mobile electronic device 4 to provide other input, such as selection inputs. The track ball 24 is freely rotatable on the housing 6 and thus is able to provide navigational inputs in the vertical direction, i.e., the up-down direction, in the horizontal direction, i.e, the left-right direction, as well as combinations thereof. The keys 28 and the track ball 24 serve as input members which are, actuatable to provide input to the processor apparatus 16.

Examples of other input members not expressly depicted herein would include, for instance, a mouse or track wheel for providing navigational inputs, such as could be reflected by movement of a cursor on the display 32, and other inputs such as selection inputs. Another exemplary input member may be an optical trackpad, which may be responsive to movements like the rotational movements that would rotate the track ball 24, and depressions like those that would depress the track ball 24. Still other exemplary input members would include a touch-sensitive display, a stylus pen for making menu input selections on a touch-sensitive display displaying menu options and/or soft buttons of a graphical user interface (GUI), hard buttons disposed on the housing 6 of the mobile electronic device 4, and so on. Examples of other output devices would include a touch-sensitive display, an audio speaker, and so on.

The processor apparatus 16 comprises a processor 36 and a memory 40. The processor 36 may be, for example and without limitation, a microprocessor (µP) that interfaces with the memory 40. The memory 40 can be any one or more of a variety of types of internal and/or external storage media such as, without limitation, RAM, ROM, EPROM(s), EEPROM(s), FLASH, and the like that provide a storage register, i.e., a machine readable medium, for data storage such as in the fashion of an internal storage area of a computer, and can be volatile memory or nonvolatile memory. The memory 40 has stored therein a number of routines 44 that are executable on the processor 36. As employed herein, the expression "a number of and variations thereof shall refer broadly to any nonzero quantity, including a quantity of one. One of the routines 44 is a graphical user interface (GUI) routine that is operable to provide visual output on the display 32 in response to input.

The camera module 18 comprises an image sensor 48 having a lens. The camera module further comprises a processor system 52 that receives signals from the image sensor 48 and subjects the image signals to one or more image processing operations.

One of the operations that is performed by the processor system 52 on image data is an auto white balance operation that can be said to be performed by an auto white balance system. Advantageously, the improved auto white balance system employed on the camera module 18 provides improved processing by imposing certain constraints upon the correlated color temperature (CCT) that can be employed by the auto white balance in processing an image. As is generally understood, the typical methodology for the processing of an image includes determining the identity of an illuminant of the scene that has been captured in the image. The illuminant is the source of electromagnetic energy that has illuminated the subject of the image and is typically identified as one of a number of predetermined natural and artificial lighting conditions of differing intensities. As employed herein, the expression "predetermined" and variations thereof refers generally to something that is determined, set, or is otherwise established in advance of another event. The methodology then includes scaling red, blue, and sometimes green color intensities to conform to the illluminant. The camera module 18 employs a plurality of preset CCTs stored thereon that are each reflective of a typical illumination scenario. By way of example, the midday sun in Western European / Northern Europe is a "daylight" natural light illuminant that is referred by the designation D65 and that has a correlated color temperature of about 6500 degrees Kelvin. Other known preset CCTs that are stored on the processor system 52 for use by the auto white balance may include, by way of example:

| CCT (Degrees Kelvin) | Description of Color Temperature |
|---|---|
| 1500 | Candle |
| 1800 | Sunlight at dawn |
| 2000 | High pressure sodium light |
| 2700 to 3000 | Conventional incandescent light |
| 2800 | Warm white fluorescent light |
| 3000 | Halogen light |
| 3200 | Sunrise / sunset |
| 3400 | Tungsten lamp |
| 4000 | Cool white fluorescent light |
| 4500 to 5000 | Xenon lamp |
| 5000 | Sunlight at midday |
| 5500 to 5600 | Electric photo flash |
| 6000 | Mercury vapor light |
| 6500 | Daylight (D65) |
| 6500 to 7500 | Overcast sky |
| 9000 to 12000 | Blue sky |

In typical operation, the processor system 52 collects autofocus (AF) data such as by the physical distance between the camera module 18 and the subject of an image. Auto exposure (AE) data is also collected, which provides an estimate of the brightness of the illuminant on the scale of, for example, 0 lux to 500 klux, for instance. The camera module 18 may further gather image signal processing (ISP) data to determine certain content regarding the image, such as whether the image incudes a horizon which would delineate a blue sky, whether the scene is backlit, whether the scene comprises a face, whether the scene is high-contrast, the scene comprises a predominance of snow or sand, and the like. Additionally, some initial information for the auto white balance algorithm is gathered, such as would determine whether a significant portion of the image includes a dominant color. The system then typically employs one or more of these data to process image data in various fashions.

Advantageously, the auto white balance system of the instant application employs AF distance data to impose certain constraints upon the CCT that can be employed by the auto white balance system in certain circumstances. By way of example, one or more predetermined distance thresholds may be established and stored on the processor system 52, and if it is determined that the distance between the camera module 18 and the subject of an image meets or exceeds one such threshold, a particular constraint that corresponds with the threshold is imposed on the auto white balance system.

Numerous such constraints can be employed. For instance, a predetermined threshold might be whether the distance between the camera module 18 and the subject is equal to or less than a predetermined macro distance, such as ten centimeters. That is, the threshold potentially is a distance between the subject and the camera module 18 of ten centimeters, and if the threshold is met or exceeded by the distance being ten centimeters or less, respectively, a constraint that corresponds with the aforementioned threshold is imposed on the CCT. In the instant example, the constraint that is imposed may be that the CCT that is employed by the auto white balance system must be greater than a preset CCT for sunrise/sunset which, in the present example, is indicated elsewhere herein as being 3200 degrees Kelvin. If the CCTs that are available for use by the auto white balance are the present ones set forth above, this would mean that the auto white balance could choose a CCT of 3400 degrees Kelvin (tungsten lamp) or a higher CCT for the processing of the image. The reason for constraining the CCT in such a fashion is that for close-up macro photos, very little likelihood exists that the lighting of the image is by relatively dime natural light at sunrise or sunset or an illuminant of equivalent brightness.

Such a constraint on the CCT can have numerous benefits. For example, a rose may have a predominant color of red. However, if a close-up short distance macro photo of the rose is taken with the auto white balance employing a CCT that corresponds with sunset, the true red color of the rose may be undesirably shifted from its true color by the auto white balance system. Such a scenario might occur if the auto white balance system erroneously thinks that the reddish nature of the image has resulted from natural sunlight at sunset. Advantageously, therefore, by providing the constraint on the improved auto white balance system to employ a CCT greater than 3200 degree Kelvin in the instant example, the predominance of the red coloration in the image data can be effectively ignored by the auto white balance system. The original red color will thus remain in the photo without being undesirably compensated by the auto white balance system to an incorrect color.

By way of further example, if it is determines that the distance between the camera module 8 and the subject is very far, i.e., in excess of ten meters, this may result in a predetermined constraint on the auto white balance system to employ a CCT that is higher than the preset correlation for cool fluorescent light which, in the example set forth herein, is 4000 degrees Kelvin. The reasoning for such a constraint in this situation is that at long distances the illuminant is unlikely to be, for instance, incandescent or fluorescent lighting and rather is likely to be natural lighting at midday, or be brighter still, by way of example.

Numerous other scenarios can trigger pre-established constraints on the CCT that is employed as the detected illuminant by the auto white balance system. For instance, if the content of an image is determined to include a backlit scene, it can be assumed that the illumination is daylight and thus result in a constraining of the CCT to be 5000 degrees Kelvin or above. Similarly, an indication that the content of an image includes a predominance of snow or sand may similarly trigger the constraint that the CCT be 5000 degrees Kelvin or higher. By way of a further example, it may be determined that the image includes a line or other delineation of a horizon as would suggest the existence of a blue sky, which again may trigger the imposition of the constraint that the CCT be 5000 degrees Kelvin or higher, In this latter circumstance, and depending upon the AE data brightness of the image, it may be desirable to impose as the constraint that the CCT must be 9000 degrees Kelvin or higher, by way of further example.

It should be understood from the foregoing that any of a variety of data can be detected to constrain the auto white balance in a predetermined fashion and that other scenarios are possible. For instance, the AE data that is indicative of the brightness of the illuminant can be employed to further specify the CCT that is already constrained in the aforementioned fashion. As already been suggested, the determination that the content of the image includes a delineation of sky might constrain the auto white balance to employ a CCT of 5000 degrees Kelvin or above, but the AE data may indicate a very high level of illumination of, for instance, 500 klux, which would indicate that the CCT should be further constrained to being 9000 degrees Kelvin or above.

Still alternatively, it may be desirable to pulse a strobe or other known light source that is a part of the camera module 18 in order to impinge on the subject a predetermined type of light in order to evaluate the difference in image data between the non-strobe illuminated condition and the strobe-illuminated condition. Other uses of data and corresponding constraints on the auto white balance will be apparent to one skilled in the art.

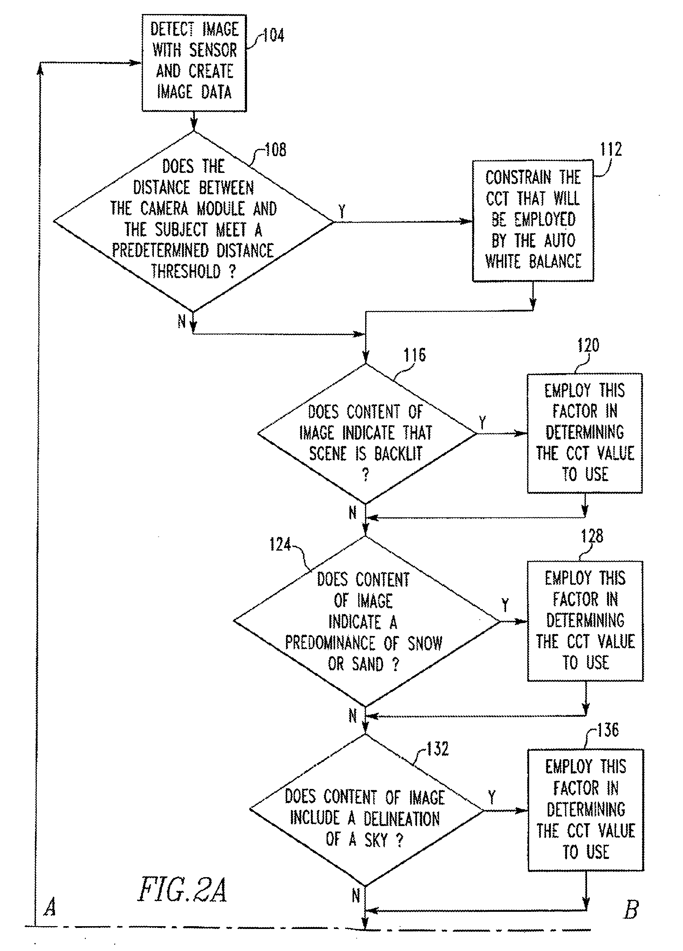

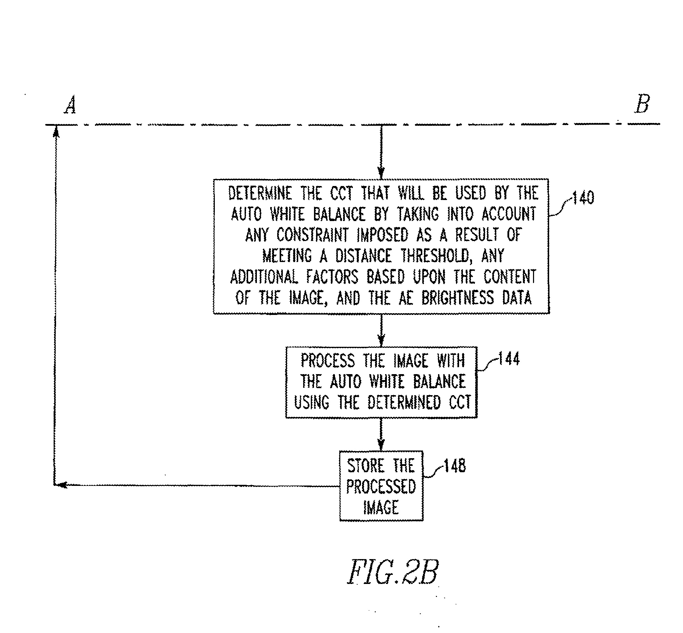

An exemplary flowchart depicting certain aspects of an improved method is depicted generally in Fig. 2. Processing begins, for instance, at 104 where an image is received by the sensor 48, and image data is provided by the sensor 48 to the processor system 52. Processing continues, as at 108, where it is determined whether a physical distance between the camera module 18 and the subject of an image meet or exceed a predetermined threshold. As set forth above, one such threshold is the distance being at or less than a close-up macro distance range, and an example of such a threshold being exceeded is if the macro distance range is ten centimeters and the distance between the subject and the camera module 18 is determined to be six centimeters. Another such threshold is when the distance is at or beyond that where incandescent light and fluorescent light are unlikely to be the illuminant of the subject. If either threshold or another such predetermined threshold is met or exceeded, processing continues, as at 112, where the constraint that corresponds with the aforementioned threshold is imposed upon the CCT to limit the CCT that can be detected and employed by the auto white balance system.

From both 108 and 112, processing continues, as at 116, where it is determined whether the content of the image suggests that the image includes a backlit portion. If such backlighting of the scene is detected at 116, the fact of such backlighting is employed, as at 120, in further establishing the CCT that will be used by the auto white balance. In the situation where backlighting is detected, a relatively higher CCT likely would be chosen than if the determination at 116 is negative.

From both 116 and 120, processing continues, as at 124, where it is determined whether the content of the image indicates a predominance of snow or sand. If so, processing continues, as at 128, where this determination is used in further establishing the CCT that will be employed by the auto white balance, as at 128. In the situation where a predominance of snow or sand is detected, a relatively higher CCT likely would be chosen than if the determination at 124 is negative.

Processing continues from 124 and 128 to 132 where it is determined whether the content of the image includes a delineation between a horizon and terrestrial regions, such as would indicate the existence of a sky, i.e., a blue sky or otherwise. Such a determination can potentially be further limited by a determination that the detected horizon is linear and is oriented horizontally depending upon the orientation of the camera module 18. If the existence of such a sky is detected, as at 132, processing continues, as at 136, where the fact of such a sky is used in further determining the CCT that will be employed by the auto white balance.

Processing continues from both 132 and 136 to 140 where the CCT that will be used by the auto white balance is determined in accordance with any constraint that is imposed, as at 112, based at least in part upon the meeting of a distance threshold. The CCT is further determined in accordance with any further inputs that are provided, as at 120, 128, and 136, and may be further determined in accordance with the AE data of detected brightness. Processing then continues, as at 144, where the image data is processed with the auto white balance using the CCT that was determined at 140. The image is then stored, as at 148, and is potentially output on the display 32. Processing thereafter returns to 104 where a further image can be detected.

It thus can be seen that various data detected by the sensor 48 is employed by the processor system 52 in providing an improved auto white balance system by imposing constraints upon the CCT that can be employed by the auto white balance system in processing image data. As mentioned above, distance thresholds can be established, which, if met, will result in the imposition of a corresponding constraint on the CCT that will be used by the auto white balance. Additionally or alternatively, the content of the image can be assessed to determine whether further adjustment to the CCT is warranted. Additionally, the brightness of the illuminant can provide data that is useful in determining the CCT to employ. Still other inputs can be employed, such as by detecting the result of a brief strobe flash on the subject to determine the result of a known quantity of light striking the subject, and this can further be used to determine the CCT to employ by the auto white balance.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended.

## Claims

1. A method of operating an auto white balance system of a camera (18) of a mobile electronic device (4), the method comprising:
making a determination (108) that a distance between the camera and a subject meets or exceeds one of a number of predetermined distance thresholds;
making another determination that the image comprises
a backlit scene (116);
responsive to the making of the determination and the making of the another determination, imposing (112) a particular constraint upon a correlated color temperature that will be employed by the auto white balance in processing an image, the particular constraint being based at least in part upon the one of the number of predetermined distance thresholds and comprising a requirement that the correlated color temperature employed by the auto white balance be at least 5000 degrees Kelvin; and
subjecting (144) the image to the auto white balance system as constrained by the particular constraint.

2. The method of Claim 1, further comprising:
making, as the determination that a distance between the camera and a subject meets or exceeds one of a number of predetermined distance thresholds, a determination that the distance between the camera and the subject is greater than a predetermined distance; and
responsive thereto, imposing as the particular constraint upon the correlated color temperature a requirement that the correlated color temperature employed by the auto white balance be higher than that of a preset correlated color temperature for cool fluorescent light.

3. A mobile electronic device (4) comprising;
a processor apparatus (16);
an input apparatus (8) comprising a camera module (18);
an output apparatus (12) comprising a display (32);
one or more routines (44) being stored on the mobile electronic device which, when executed on a processor (36) of the mobile electronic device, cause the mobile electronic device to operate an auto white balance system including operations that comprise:
making a determination (108) that a distance between the camera and a subject meets or exceeds one of a number of predetermined distance thresholds;
making another determination that the image comprises
a backlit scene (116);
responsive to the making of the determination and the making of the another determination, imposing (112) a particular constraint upon a correlated color temperature that will be employed by the auto white balance in processing an image, the particular constraint being based at least in part upon the one of the number of predetermined distance thresholds and comprising a requirement that the correlated color temperature employed by the auto white balance be at least 5000 degrees Kelvin; and
subjecting (144) the image to the auto white balance system as constrained by the particular constraint.

4. The method of Claim 3 wherein the operations further comprise:
making, as the determination that a distance between the camera and a subject meets or exceeds one of a number of predetermined distance thresholds, a determination that the distance between the camera and the subject is greater than a predetermined distance; and
responsive thereto, imposing as the particular constraint upon the correlated color temperature a requirement that the correlated color temperature employed by the auto white balance be higher than that of a preset correlated color temperature for cool fluorescent light.

## Patentansprüche

1. Ein Verfahren zum Betreiben eines automatischen Weißabgleichsystems einer Kamera (18) einer mobilen elektronischen Vorrichtung (4), wobei das Verfahren aufweist:
Treffen einer Bestimmung (108), dass eine Entfernung zwischen der Kamera und einem Subjekt einen aus einer Anzahl von vorgegebenen Entfernungsschwellenwerten erreicht oder übersteigt;
Treffen einer weiteren Bestimmung, dass das Bild eine von hinten beleuchtete Szene (116) aufweist;
in Reaktion auf das Treffen der Bestimmung und das Treffen der weiteren Bestimmung, Auferlegen (112) einer bestimmten Beschränkung auf eine korrelierte Farbtemperatur, die durch den automatischen Weißabgleich bei einer Verarbeitung eines Bilds eingesetzt wird, wobei die bestimmte Beschränkung zumindest teilweise basierend auf dem einen der Anzahl von vorgegebenen Entfernungsschwellenwerten basiert und eine Anforderung aufweist, dass die korrelierte Farbtemperatur, die von dem automatischen Weißabgleich eingesetzt wird, zumindest 5000 Grad Kelvin ist; und
Unterziehen (144) des Bilds dem automatischen Weißabgleichsystem, wie durch die bestimmte Beschränkung eingeschränkt.

2. Das Verfahren gemäß Anspruch 1, das weiter aufweist:
Treffen einer Bestimmung, als die Bestimmung, dass eine Entfernung zwischen der Kamera und einem Subjekt einen aus einer Anzahl von vorgegebenen Entfernungsschwellenwerten erreicht oder übersteigt, dass die Entfernung zwischen der Kamera und dem Subjekt größer als eine vorgegebene Entfernung ist; und
in Reaktion darauf, Auferlegen als die bestimmte Beschränkung auf die korrelierte Farbtemperatur einer Anforderung, dass die korrelierte Farbtemperatur, die von dem automatischen Weißabgleich eingesetzt wird,
höher ist als die einer voreingestellten korrelierten Farbtemperatur für kaltes Leuchtstofflicht.

3. Eine mobile elektronische Vorrichtung (4), die aufweist:
eine Prozessorvorrichtung (16);
eine Eingabevorrichtung (8), die ein Kameramodul (18) aufweist;
eine Ausgabevorrichtung (12), die eine Anzeige (32) aufweist;
eine oder mehrere Routine(n) (44), die auf der mobilen elektronischen Vorrichtung gespeichert ist/sind, die bei Ausführung auf einem Prozessor (36) der mobilen elektronischen Vorrichtung die mobile elektronische Vorrichtung veranlasst/veranlassen, ein automatisches Weißabgleichsystem zu betreiben, einschließlich Operationen, die aufweisen:
Treffen einer Bestimmung (108), dass eine Entfernung zwischen der Kamera und einem Subjekt einen aus einer Anzahl von vorgegebenen Entfernungsschwellenwerten erreicht oder übersteigt;
Treffen einer weiteren Bestimmung, dass das Bild eine von hinten beleuchtete Szene (116) aufweist;
in Reaktion auf das Treffen der Bestimmung und das Treffen der weiteren Bestimmung, Auferlegen (112) einer bestimmten Beschränkung auf eine korrelierte Farbtemperatur, die durch den automatischen Weißabgleich bei einer Verarbeitung eines Bilds eingesetzt wird, wobei die bestimmte Beschränkung zumindest teilweise basierend auf dem einen der Anzahl von vorgegebenen Entfernungsschwellenwerten basiert und eine Anforderung aufweist, dass die korrelierte Farbtemperatur, die von dem automatischen Weißabgleich eingesetzt wird, zumindest 5000 Grad Kelvin ist; und
Unterziehen (144) des Bilds dem automatischen Weißabgleichsystem, wie durch die bestimmte Beschränkung eingeschränkt.

4. Das Verfahren gemäß Anspruch 3, wobei die Operationen weiter aufweisen:
Treffen einer Bestimmung, als die Bestimmung, dass eine Entfernung zwischen der Kamera und einem Subjekt einen aus einer Anzahl von vorgegebenen Entfernungsschwellenwerten erreicht oder übersteigt, dass die Entfernung zwischen der Kamera und dem Subjekt größer als eine vorgegebene Entfernung ist; und
in Reaktion darauf, Auferlegen als die bestimmte Beschränkung auf die korrelierte Farbtemperatur einer Anforderung, dass die korrelierte Farbtemperatur, die durch den automatischen Weißabgleich eingesetzt wird, höher ist als die einer voreingestellten korrelierten Farbtemperatur für kaltes Leuchtstofflicht.

## Revendications

1. Procédé de mise en oeuvre d'un système d'équilibrage automatique des blancs d'un dispositif de prise de vue (18) d'un dispositif électronique mobile (4), le procédé comprenant :
la détermination (108) que la distance entre le dispositif de prise de vue et un sujet est égale à ou excède l'un d'un certain nombre de seuils prédéterminés de distance ;
une autre détermination que l'image comprend une scène rétro-éclairée (116) ;
en réponse à la détermination et à l'autre détermination, l'imposition (112) d'une contrainte particulière à une température de couleur corrélée qui sera employée par l'équilibrage automatique des blancs dans le traitement d'une image, la contrainte particulière étant basée au moins en partie sur ledit seuil du nombre de seuils prédéterminés de distance et comprenant l'exigence que la température de couleur corrélée employée par l'équilibrage automatique des blancs soit au moins de 5 000 degrés Kelvin ; et
la soumission (144) de l'image au système d'équilibrage automatique des blancs tel que contraint par la contrainte particulière.

2. Procédé selon la revendication 1, comprenant en outre :
en tant que détermination que la distance entre le dispositif de prise de vue et le sujet est égale à ou excède l'un d'un nombre de seuils prédéterminés de distance, la détermination que la distance entre le dispositif de prise de vue et le sujet est plus grande qu'une distance prédéterminée ; et
en réponse à cela, l'imposition en tant que contrainte particulière à la température de couleur corrélée de l'exigence que la température de couleur corrélée employée par l'équilibrage automatique des blancs soit plus élevée que celle d'une température de couleur corrélée préétablie pour de la lumière fluorescente froide.

3. Dispositif électronique mobile (4) comprenant :
un appareil de traitement (16) ;
un appareil d'entrée (8) comprenant un module de dispositif de prise de vue (18) ;
un appareil de sortie (12) comprenant un écran (32) ;
une ou plusieurs routines (44) étant mémorisées sur le dispositif électronique mobile qui, lorsqu'elles sont exécutées sur un processeur (36) du dispositif électronique mobile, amènent le dispositif électronique mobile à mettre en oeuvre un système d'équilibrage automatique des blancs incluant des opérations qui comprennent :
la détermination (108) que la distance entre le dispositif de prise de vue et un sujet est égale à ou excède l'un d'un certain nombre de seuils prédéterminés de distance ;
une autre détermination que l'image comprend une scène rétro-éclairée (116) ;
en réponse à la détermination et à l'autre détermination, l'imposition (112) d'une contrainte particulière à une température de couleur corrélée qui sera employée par l'équilibrage automatique des blancs dans le traitement d'une image, la contrainte particulière étant basée au moins en partie sur ledit seuil du nombre de seuils prédéterminés de distance et comprenant l'exigence que la température de couleur corrélée employée par l'équilibrage automatique des blancs soit au moins de 5 000 degrés Kelvin ; et
la soumission (144) de l'image au système d'équilibrage automatique des blancs tel que contraint par la contrainte particulière.

4. Procédé selon la revendication 3, dans lequel les opérations comprennent en outre :
en tant que détermination que la distance entre le dispositif de prise de vue et le sujet est égale à ou excède l'un d'un nombre de seuils prédéterminés de distance, la détermination que la distance entre le dispositif de prise de vue et le sujet est plus grande qu'une distance prédéterminée ; et
en réponse à cela, l'imposition en tant que contrainte particulière à la température de couleur corrélée de l'exigence que la température de couleur corrélée employée par l'équilibrage automatique des blancs soit plus élevée que celle d'une température de couleur corrélée préétablie pour de la lumière fluorescente froide.
